Europäisches Patentamt

European Patent Office

Office européen des brevets

(11) Numéro de publication: **0 298 857**
**A1**

(12) **DEMANDE DE BREVET EUROPEEN**

(21) Numéro de dépôt: 88401735.1

(22) Date de dépôt: 04.07.88

(51) Int. Cl.⁴: **F 02 N 15/02**
F 16 D 45/00, F 16 D 43/18,
F 16 D 41/32

(30) Priorité: 07.07.87 FR 8709648

(43) Date de publication de la demande:
**11.01.89 Bulletin 89/02**

(84) Etats contractants désignés: **BE ES GB IT**

(71) Demandeur: **PEUGEOT MOTOCYCLES**
**Rue du 17 Novembre**
**F-25350 Beaulieu Mandeure (FR)**

(72) Inventeur: **Lacroix, Bernard**
**2, Rue de la Vouivre**
**F-25200-Montbeliard (FR)**

(74) Mandataire: **de Morgues, Marie Emma et al**
**Cabinet Lavoix 2, place d'Estienne d'Orves**
**F-75441 Paris Cédex 09 (FR)**

(54) **Dispositif auxiliaire de démarrage notamment pour véhicule à deux roues.**

(57) Dispositif auxiliaire de démarrage pour un véhicule à moteur permettant de faire démarrer le véhicule en cas de défaillance du système principal. Il comporte des moyens complémentaires (23, 29, 31), montés respectivement sur un organe menant (1) et un organe mené (17), permettant d'entraîner temporairement un organe menant (1) à partir de l'organe mené (17) jusqu'au moment où la vitesse de l'organe menant est supérieure à celle de l'organe mené. L'organe mené porte un doigt axial (23) qui coulisse dans une lumière radiale (19) entre une position d'entrraînement où il est en contact avec une patte (31) portée par l'organe menant et une position de repos où il est éloigné de cette patte.

FIG.1

EP 0 298 857 A1

**Description**

**Dispositif auxiliaire de démarrage notamment pour véhicule à deux roues**

L'invention concerne un dispositif auxiliaire de démarrage, destiné notamment aux véhicules à deux roues et, tout particulièrement, aux véhicules du type cyclomoteur.

Actuellement le démarrage du moteur des véhicules de ce type est souvent effectué par un dispositif constitué par un embrayage de lancement actionné par le pédalier. Cependant, depuis quelques années les cyclomoteurs ne comportent plus obligatoirement un pédalier et donc plus obligatoirement d'embrayage de lancement.

Lorsque le dispositif de démarrage est constitué par un dispositif du type kick ou par un démarreur, en cas de défaillance de ce dispositif, il n'est alors plus possible de faire démarrer le moteur en poussant le véhicule (démarrage dit "à la pousette").

Sur certains véhicules a moteur (U.S-A- 2926 765 et DE-A-1110532) un entraînement unidirectionnel du type roue libre est monté entre les deux organes, coaxialement à ceux-ci, pour permettre un entraînement temporaire de l'organe mené par l'organe menant et l'interruption de cet entrainement dès que la vitesse de l'organe menant est supérieure à celle de l'organe mené. Un dispositif de débrayage est alors nécessaire pour rendre inactive la roue libre. L'ensemble du dispositif est par suite complexe et peu adapté à un véhicule à deux roues du type cyclomoteur.

La présente invention a pour but de remédier à cet inconvénient en réalisant un dispositif auxiliaire de démarrage permettant d'entraîner un organe menant, par exemple dans le cas du cyclomoteur, le moteur, à partir d'un organe mené, par exemple la roue arrière du véhicule, qui soit suffisemment simple et peu encombrant pour être adapté à un cyclomoteur.

L'invention a en effet pour objet un dispositif auxiliaire de démarrage pour un véhicule à moteur comprenant, entre un organe menant et un organe mené coaxiaux, une transmission munie d'un embrayage centrifuge et des moyens adaptés pour entraîner temporairement l'organe menant à partir de l'organe mené, caractérisé en ce que l'organe mené porte un doigt unique, qui est mobile par rapport à l'axe des deux organes entre une position d'entraînement dans laquelle il est proche de l'axe et en contact avec une patte portée par l'organe menant, et une position de repos vers laquelle il est repoussé par la patte lorsque la vitesse de l'organe menant devient supérieure à celle de l'organe mené et dans laquelle il est éloigné de la patte.

Selon d'autres caractéristiques :

- le doigt est monté axialement et coulisse à frottement dans une lumière sensiblement radiale de l'organe mené;

- lorsque l'organe menant et l'organe mené occupent une position relative pour laquelle la lumière et la patte se trouvent sensiblement dans le même plan radial, ladite patte est orientée obliquement par rapport à la direction sensiblement radiale de la lumière ;

- la patte comporte, en considérant le sens de rotation des organes menant et mené, une face avant et une face arrière, la face arrière constituant une surface d'entraînement contre laquelle le doigt vient en butée lorsque l'organe mené tourne à une vitesse supérieure à celle de l'organe menant, tandis que la face avant constitue une rampe qui vient en contact Opavec le doigt et le repousse radialement vers l'extérieur, lorsque l'organe menant tourne à une vitesse supérieure à celle de l'organe mené.

L'invention va être décrite plus en détail ci-dessous en se référant aux dessins annexés donnés uniquement à titre d'exemple et sur lesquels :

- la Fig.1 représente une vue en coupe du dispositif selon l'invention ;

- les Fig. 2 à 4 représentent des vues schématiques en coupe de diverses étapes de fonctionnement de ce dispositif.

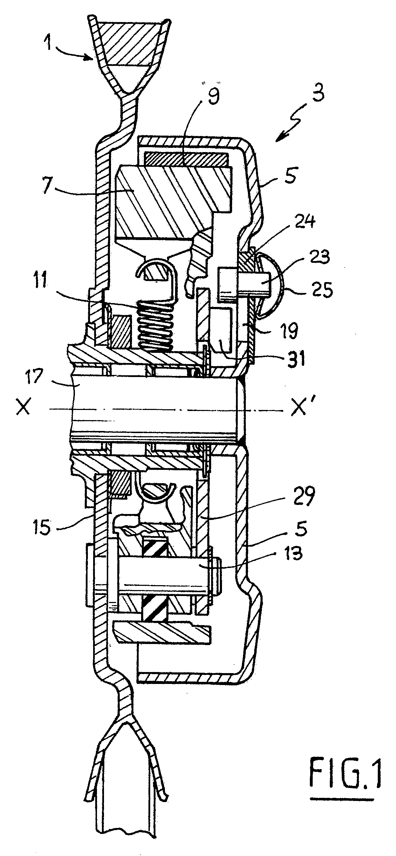

On a représenté Fig. 1, une partie seulement d'une transmission à poulies et courroie d'un véhicule à moteur de type cyclomoteur, comportant le dispositif de l'invention. Sur la poulie réceptrice 1 de la transmission ou organe menant, est monté de manière classique un embrayage centrifuge 3. L'embrayage 3, de manière connue, comporte un tambour 5 et des masselottes 7 munies de garniture 9 et de leurs ressorts d'accrochage 11. Les masselottes 7 de l'embrayage 3 sont supportées par et articulées autour d'axes 13 fixés sur le flasque 15 de la poulie réceptrice 1. Le tambour d'embrayage 5 est solidaire en rotation d'un arbre mené 17 d'axe X-X', lui-même relié à la roue arrière du véhicule par un dispositif de transmission non représenté.

Le tambour d'embrayage 5 comporte une lumière 19, orientée sensiblement radialement par rapport à l'axe X-X', dans laquelle est monté coulissant à friction un doigt mobile 23 muni d'un organe de manoeuvre 25. Le doigt 23 est fixé sur un élément ou garniture 24 en matériau de friction qui coulisse dans la lumière 19 le long de la paroi du tambour d'embrayage 5 lorsque l'organe de manoeuvre 25 est actio né. Le coulissement du doigt s'effectue suivant une direction sensiblement radiale par rapport à l'axe de rotation X-X' et le doigt 23 est déplacé dans la lumière 19 entre une position déverrouillée de repos dans laquelle il est éloigné de l'axe X-X' et une position verrouillée dans laquelle il est relativement proche de cet axe.

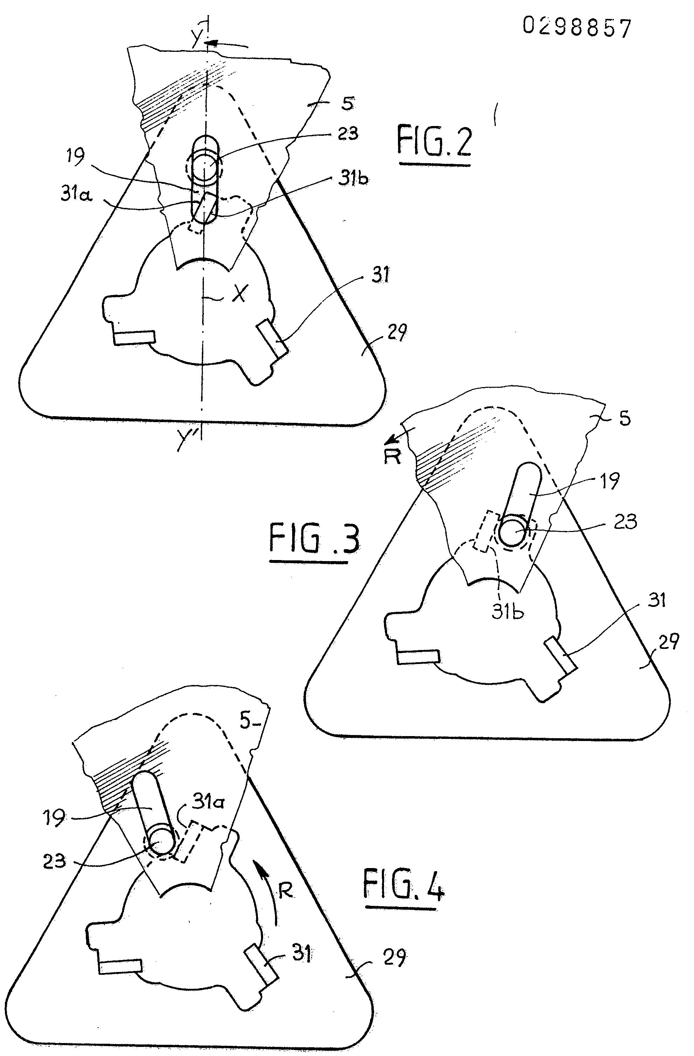

Une plaque de renfort triangulaire 29, munie d'au moins une patte 31 venue de matière avec elle, est solidaire du flasque 15 de la poulie. La patte 31 porte, en considérant le sens de la rotation de l'organe menant ou poulie 1 et l'arbre mené 17, une face avant 31a et une face arrière 31b. La patte 31 est orientée de manière telle que, lorsque la poulie 1 et le tambour d'embrayage 5 solidaire de l'arbre 17 occupent une position relative pour laquelle la lumière 19 et la patte 31 se trouvent dans le même plan radial, la patte 31 est orientée obliquement par rapport à la direction radiale Y-Y' de la lumière 19 (Fig. 2). Le doigt 23 se trouve alors dans sa position déverrouillée éloignée de l'axe X-X' et il est sensiblement plus éloigné de cet axe que la patte 31.

La plaque 29 peut être, comme représenté Fig. 1, fixée à l'axe d'articulation 13 des masselottes et aussi comporter plusieurs pattes 31, par exemple comme représenté figures 2 à 4, trois pattes disposées à 120° autour de l'axe de l'organe menant.

Dans des conditions normales de fonctionnement le doigt 23 occupe la position déverrouillée représentée à la Fig. 2 et la liaison entre le moteur et la roue motrice, est assurée grâce à la transmission à poulies et courroie, par la poulie réceptrice 1 et l'embrayage centrifuge 3. Le véhicule peut alors être entraîné par son moteur, après démarrage, ou rouler sans que le moteur se mette en route. En cas de défaillance du système de démarrage du moteur, on cherche à inverser les rôles des organes menant et mené, c'est-à-dire dans le mode de réalisation représenté ici, qu'on souhaite entraîner la poulie 1 à partir de l'arbre mené 17.

En liaison avec les figures 2,3, et 4, on étudiera maintenant le fonctionnement du dispositif de l'invention. Fig. 2, on a représenté le doigt 23 en position déverrouillée dans la lumière 19 c'est-à-dire dans la position la plus éloignée de l'axe X-X'. On enclenche le doigt 23 en exerçant une force dirigée vers le bas sur l'organe de manoeuvre 25 pour le placer en position d'entraînement de la patte 31 de la plaque 29. Le doigt se trouve alors dans la lumière 19 dans la position représentée Fig. 3, c'est-à-dire qu'il est situé dans sa position plus proche de l'axe X-X' et il vient en contact contre la face arrière 31b de la patte 31, cette face formant une surface d'entraînement pour la patte. Dans cette position, l'extrémité de la lumière 19 la plus proche de l'axe X-X' sert de butée pour le doigt 23. Le doigt 23 solidaire du tambour d'embrayage 5 est entraîné en rotation lorsqu'on entraîne l'arbre mené 17 par l'intermédiaire de la roue motrice, en poussant le véhicule. La patte 31 est alors entraînée en rotation, dans le sens indiqué par la flèche R, par le doigt 23, par l'intermédiaire de la liaison entre le doigt et la face 31b, ce qui entraîne la plaque 29 et donc la poulie réceptrice 1 à laquelle la plaque 29 est reliée par les axes 13 des masselottes (Fig. 1). L'arbre mené 17, et donc le tambour d'embrayage 5, tourne à ce moment là, à la même vitesse que celle de la poulie réceptrice 1.

Lorsque le moteur est lancé, la vitesse de rotation de la poulie 1 devient supérieure à celle du tambour d'embrayage 5, sans pour autant provoquer l'actionnement de l'embrayage 3. Dès qu'il y a différentiel de vitesse la liaison entre la patte 31 et le doigt 23 est interrompue. A cet instant, le doigt 23 et la patte 31 se trouvent dans une position telle que la face avant 31a de la patte 31 est en contact avec le doigt 23 comme représenté figure 4. La face avant 31a constitue une rampe qui repousse le doigt 23 radialement vers l'extérieur sous l'effet de la poussée exercée par la patte 31 puis (ou et) de la force centrifuge le doigt 23 est alors chassé vers sa position déverrouillée de repos de la Fig. 2.

Dans le même temps, l'embrayage centrifuge 3 entre en action et assure la liaison organe menant-organe mené par l'intermédiaire des garnitures 9 des masselottes 13 qui viennent frotter contre le tambour d'embrayage 5 solidaire de l'arbre mené 17.

Dans le cas où la plaque 29 comporte, comme représenté aux figures 2 à 4, plusieurs pattes 31, le doigt 23 est chassé en position déverrouillée par la patte 31 qui, la première dans le sens de rotation de la plaque, vient en butée par sa face 31a contre le doigt 23 et la liaison d'entraînement organe mené -organe menant s'interrompt rapidement, au lieu de s'étendre sur pratiquement une rotation complète.

On a donc par la présente invention, réalisé un dispositif auxiliaire de démarrage simple et fiable qui permet de faire démarrer un véhicule à deux roues, comportant un système de transmission avec un embrayage centrifuge, en établissant un entraînement du moteur à partir de la roue arrière de ce véhicule. Ce dispositif ne comporte qu'un très petit nombre de pièces, présente un encombrement réduit et un coût relativement peu élevé et est automatiquement débrayé, ce qui permet son adaptation sur tous les véhicules à deux roues et plus particulièrement aux cyclomoteurs.

Bien entendu de nombreuses autres applications peuvent être envisagées sans pour cela sortir du cadre de la présente invention.

## Revendications

1. Dispositif auxiliaire de démarrage pour un véhicule à moteur comprenant, entre un organe menant (1) et un organe mené (17) coaxiaux, une transmission munie d'un embrayage centrifuge (3) et des moyens (23, 29, 31) adaptés pour entraîner temporairement l'organe menant (1) à partir de l'organe mené (17), caractérisé en ce que l'organe mené (17) porte un doigt unique (23), qui est mobile par rapport à l'axe (X-X) des deux organes entre une position d'entraînement dans laquelle il est proche de l'axe et en contact avec une patte (31) portée par l'organe menant, et une position de repos vers laquelle il est repoussé par la patte (31) lorsque la vitesse de l'organe menant devient supérieure à celle de l'organe mené et dans laquelle il est éloigné de la patte (31).

2. Dispositif selon la revendication 1, caractérisé en ce que le doigt (23) est dirigé axialement et coulisse dans une lumière (19) sensiblement radiale de l'organe mené.

3. Dispositif selon l'une des revendications précédentes, caractérisé en ce que le doigt mobile (23) est solidaire d'un organe de manoeuvre manuelle (25).

4. Dispositif selon la revendication 3, caractérisé en ce que le doigt (23) est monté à frottement dans la lumière (19).

5. Dispositif selon l'une des revendications 2 à 4, caractérisé en ce que lorsque l'organe menant (1) et l'organe mené (17) occupent une position relative pour laquelle la lumière (19) et la patte (31) se trouvent sensiblement dans le même plan radial, la patte (31) est orientée obliquement par rapport à la direction sensiblement radiale de la lumière (19).

6. Dispositif selon l'une des revendications 1 à 5, caractérisé en ce que la patte (31) comporte, en considérant le sens de rotation des organes menant (1) et mené (17) une face (31a) avant et une face arrière (31b), la face arrière (31b) constituant une surface d'entraînement avec laquelle le doigt (23) vient en contact lorsque l'organe mené (17) tourne à une vitesse supérieure à celle de l'organe menant (1), tandis que la face avant (31a) constitue une rampe qui vient en contact avec le doigt (23) et le repousse radialement vers l'extérieur, lorsque l'organe menant (1) tourne à une vitesse supérieure à celle de l'organe mené (17).

7. Dispositif suivant la revendication 6, caractérisé en ce que l'extrémité de la lumière (19) la plus proche de l'axe (X-X') sert de butée pour le doigt (23) lorsqu'il est en contact avec la face arrière (31b) de la patte.

8. Dispositif suivant l'une des revendications 1 à 7, caractérisé en ce que la patte (31) est portée par une plaque (9) fixée sur des axes (13) de support et d'articulation pour des masselottes (7) de l'embragage centrifuge (3).

9. Dispositif suivant l'une des revendications précédentes, caractirisé en ce qu'il est prévu trois pattes (31) disposées à 120° autour de l'axe de l'organe menant (11).

10. Dispositif suivant l'une des revendications 8 et 9, caractérisé en ce que la ou chaque patte (31) est venue de matière avec la plaque (29).

11. Dispositif suivant l'une des revendications précédentes, caractérisé en ce que le doigt mobile (23) est porté par une garniture deOr friction (24), elle même montée coulissante dans la lumière (19).

0298857

FIG.1

0298857

FIG.2

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A- 173 720 (DEFORDT) <br> * En entier * | 1,4-6 | F 02 N 15/02 <br> F 16 D 45/00 <br> F 16 D 43/18 <br> F 16 D 41/32 |
| D,A | US-A-2 926 765 (HEID) <br> * En entier * | 1 | |
| D,A | DE-B-1 110 532 (FICHTEL & SACHS) <br> * En entier * | 1 | |
| A | FR-A- 574 935 (MONDON) <br> * En entier * | 1 | |
| A | FR-A- 345 598 (TERROT) <br> * En entier * | 1 | |
| A | DE-C- 127 563 (KONKOROWITSCH) <br> * En entier * | 2,5-7 | |
| A | PATENT ABSTRACTS OF JAPAN, vol. 10, no. 295 (M-523)[2351], 7 octobre 1986, page 117 M 523; & JP-A-61 109 924 (YAMAHA MOTOR CO., LTD) 28-05-1986 | 8-10 | |
| A | FR-A-1 404 853 (ZAVODY) | | |
| A | GB-A- 802 761 (RENAULT) | | |
| A | GB-A- 880 203 (ZAVODY) | | |

DOMAINES TECHNIQUES RECHERCHES (Int. Cl.4)

F 16 D
F 02 N

Le présent rapport a été établi pour toutes les revendications

| Lieu de la recherche | Date d'achèvement de la recherche | Examinateur |
|---|---|---|
| LA HAYE | 26-09-1988 | BALDWIN D.R. |